# EUROPEAN PATENT APPLICATION

(11) **EP 4 576 345 A1**
(43) Date of publication of application: **25.06.2025**
(21) Application number: 24197457.5
(22) Date of filing: 30.08.2024
(51) Int. Cl.: H01M 50/103, H01M 50/342

(54) **SECONDARY BATTERY**

(30) Priority: 18.12.2023 KR 20230185129
(71) Applicant: SK On Co., Ltd., Seoul 03161 (KR)
(72) Inventor: CHEONG, Hoemin, 34124 Daejeon (KR); PARK, Soo Min, 34124 Daejeon (KR); PAIK, Hyung Ju, 34124 Daejeon (KR); JEON, Hae Ryong, 34124 Daejeon (KR); HEO, Won Tae, 34124 Daejeon (KR); PARK, Soo In, 05781 Seoul (KR)
(74) Representative: Stolmár & Partner Patentanwälte PartG mbB

(57) **Abstract**

A secondary battery includes a case accommodating an electrode assembly therein, a cap plate sealing an opening of the case, and a vent provided in one or more of the case and the cap plate, wherein the vent includes: a notch induced to rupture according to internal pressure of the case and one or more bending guides inducing roll up deformation of each ruptured region. By rolling up the vent, the area of an outlet may be appropriately secured and maintained after the vent ruptures.

## Description

### BACKGROUND

### 1. FIELD

The present disclosure relates to a secondary battery capable of being charged with and discharging electricity.

### 2. DESCRIPTION OF RELATED ART

Secondary batteries are energy storage units that may be charged with and discharged of electricity. Secondary batteries have been widely used in various units that use electricity as a power source. For example, secondary batteries have been used as energy storage units in a variety of devices ranging from small devices, such as mobile phones, laptops, and tablets to large devices, such as vehicles and aircraft. In particular, in recent years, the use of secondary batteries as a vehicle power source has been actively sought.

Secondary batteries may be classified into lead-acid batteries, nickel cadmium batteries, nickel hydrogen batteries, lithium ion batteries, etc., depending on materials of the electrodes. Secondary batteries for each type may be appropriately selected depending on design capacity, usage environment, etc. Lithium-ion batteries may be implemented with relatively high voltage and capacity as compared to other types of secondary batteries. Accordingly, lithium-ion batteries have been widely used in fields that require high-density energy storage, such as vehicle battery packs, etc.

Secondary batteries, such as lithium-ion batteries, include a cathode material, an anode material, a separator, and an electrolytic solution, as main components. The cathode material and anode material are arranged with a separator formed of an insulating material therebetween, and charging or discharging may be achieved by the movement of ions through the electrolytic solution.

Meanwhile, if excessive heat occurs or the electrolytic solution is decomposed in a secondary battery due to overcharging, insertion of foreign substances, or damage to an insulation structure due to external shock, internal pressure may increase and ignition or explosion may occur. Accordingly, some types of secondary batteries are equipped with vents to discharge excessive internal pressure, etc. For example, Korean Application Publication No. 10-2023-0048765 discloses a secondary battery including such a vent (safety vent).

The above description is provided to help understand the background of the present disclosure and should not be construed to reduce, restrict, or limit the technical idea of the present disclosure. In addition, the contents described or suggested in the above description do not necessarily mean the related art, and some may include contents that do not fall under related art.

### SUMMARY

An aspect of the present disclosure may provide a secondary battery capable of improving a discharge function of internal pressure through a vent, etc.

However, the technical problems to be achieved by the exemplary embodiments of the present disclosure are not limited to the technical problems mentioned above. Other technical problems that are not mentioned may be clearly understood by those skilled in the art from the detailed description and other descriptions in the specification.

The secondary battery of the present disclosure may be widely applied in green technology fields, such as electric vehicles, battery charging stations, and solar power generation and wind power generation using batteries. In addition, the secondary battery of the present disclosure may be used in eco-friendly electric vehicles, hybrid vehicles, etc. to ameliorate climate change by suppressing air pollution and greenhouse gas emissions.

According to an aspect of the present disclosure, a secondary battery includes: a case accommodating an electrode assembly therein; a cap plate sealing an opening of the case; and a vent provided in one or more of the case and the cap plate, wherein the vent includes: a notch induced to rupture according to internal pressure of the case; and one or more bending guides inducing roll up deformation of each ruptured region.

The notch may include: a pair of first notches extending in a first direction on an outer surface of the vent and spaced apart from each other in a second direction; and a second notch extending between the pair of first notches.

The second notch may be disposed to equally divide the first notch into left and right portions in the first direction and extend in the second direction perpendicular to the first direction.

The second notch may be formed between the pair of first notches and extend obliquely at a predetermined angle with respect to the first notch.

The first notch may have a first depth from the outer surface, and the second notch may have a second depth from the outer surface, and the second depth may be formed to be deeper than the first depth by a predetermined amount.

The notch may form an "H" shape in plan view.

The bending guide may induce each region to be rolled up toward the outer surface of the vent to be deformed.

The bending guide may be concavely bent toward the inside of the case, extend in a second direction, and a plurality of bending guides may be arranged to be spaced apart from each other at predetermined intervals in a first direction, perpendicular to the second direction.

The bending guide may be formed such that one end in the second direction is spaced apart from the notch by a predetermined distance, and an opposite end corresponding to the one end is spaced apart from the notch by a predetermined distance.

The bending guide may include a first bending guide portion disposed in a first region divided by the second notch, extending in a second direction, provided in plural to be spaced apart from each other by a predetermined interval in the first direction, and inducing the first region to be rolled up and deformed to one side.

In the first bending guide portion, a gap between a pair of first bending guide portions that are relatively adjacent to the second notch may be formed to be greater, by a predetermined amount, than a gap between another pair of first bending guide portions that are relatively spaced apart from the second notch.

The bending guide may include a second bending guide disposed in a second region corresponding to the first region, extending in the second direction, provided in a plural to be spaced apart from each other by a predetermined interval in the first direction, and inducing the second region to be rolled up and deformed to the opposite side corresponding to the one side.

### BRIEF DESCRIPTION OF DRAWINGS

The above and other aspects, features and other advantages of the present disclosure will be more clearly understood from the following detailed description taken in conjunction with the accompanying drawings, in which:
FIG. 1A is a schematic perspective view of a secondary battery according to an exemplary embodiment;
FIG. 1B is a schematic exploded perspective view of the secondary battery illustrated in FIG. 1A;
FIG. 1C is a schematic internal cross-sectional view of the secondary battery illustrated in FIG. 1A;
FIG. 2A is a schematic perspective view of a vent according to an exemplary embodiment;
FIG. 2B is a schematic cross-sectional view of the vent illustrated in FIG. 2A;
FIG. 2C is a schematic operating diagram of the vent illustrated in FIG. 2A;
FIG. 3A is a schematic perspective view of a vent according to another exemplary embodiment;
FIG. 3B is a schematic cross-sectional view of the vent illustrated in FIG. 3A;
FIG. 4A is a schematic perspective view of a vent according to another exemplary embodiment;
FIG. 4B is a schematic cross-sectional view of the vent illustrated in FIG. 4a; and
FIG. 5 is a schematic perspective view of a vent according to another exemplary embodiment.

### DETAILED DESCRIPTION

Hereinafter, exemplary embodiments of the present disclosure will be described with reference to the accompanying drawings. For convenience, in the following description, a detailed description that obscures the technical gist of the present invention or for a known component will be omitted.

The following embodiments are provided to more completely describe the present disclosure to those skilled in the art to which the present disclosure pertains. The following exemplary embodiments are provided to aid in an understanding of the present disclosure, and the technical idea of the present disclosure is not limited to the specific exemplary embodiments described below. The present disclosure should be understood to broadly include various types of equivalents, substitutes, conversions, etc. that implement the technical ideas described in the following exemplary embodiments.

Terms used in the following exemplary embodiments are provided to more completely describe specific exemplary embodiments from the above viewpoint. Accordingly, the terms used in the following exemplary embodiments should not be construed to reduce, limit, or restrict the technical idea of the present disclosure.

In the following description, singular expressions may be interpreted to include plurality unless clearly excluded in the context. In addition, the expression "including" in the following description means that a component, a part, an operation, a feature, a step, a number, etc. described in the description exist, and does not mean that addition of and one or more other components, parts, operations, features, steps, numbers, etc. are excluded.

In the following description, terms, such as "first" and "second" may be used to distinguish specific components from other components. However, the above terms are used for the purpose of distinguishing specific components from other components for clarity of description and the technical ideas of each component should not be interpreted as being limited by the above terms.

A secondary battery described in this specification may include a battery that may be charged and discharged. For example, the secondary battery may include a lead-acid battery, a nickel cadmium battery, a nickel hydride battery, a lithium ion battery, etc. In this description, it is mainly assumed that the secondary battery is a lithium ion battery. In general, lithium-ion batteries may have advantages, such as lightweightedness, high energy density, and low self-discharge rate. However, it should be understood that the technical concepts described in this specification are applicable to suitable types of batteries other than lithium ion batteries.

The secondary battery described in this specification may include a single physical unit or a group unit in which a plurality of the above units are combined. For example, secondary batteries may include battery cells, battery modules, battery packs, etc., according to classification criteria commonly used in the vehicle field. In this description, it is mainly assumed that the secondary battery is a battery cell as a single unit. Generally, a battery cell is a basic unit of a battery pack including a cathode material, an anode material, a separator, and an electrolytic solution. However, it should be understood that the technical concept described in this specification may be applied to other suitable types of group units, such as battery modules and battery packs, as necessary.

The secondary battery described herein may encompass various packaging types. For example, secondary batteries may be packaged as cylindrical batteries, prismatic batteries, pouch-type batteries, coin-type batteries, etc. according to the classification criteria commonly used in the related field. In this explanation, it is mainly assumed that the secondary battery is packaged as a prismatic type batteries. Prismatic packaging, also referred to as prismatic batteries, may generally have advantages in terms of durability, safety, and convenience of mounting. However, it should be understood that the technical concept described in this specification may also be applied to other suitable packaging types, such as cylindrical, pouch-type, and coin-type, if necessary.

The secondary battery described herein may be used in various units that require electrical energy. For example, secondary batteries may be suitably used in vehicle fields in which electrical energy is used as a main or auxiliary power source. As another example, secondary batteries may be suitably used in the field of aircraft, such as personal aircraft, unmanned aerial vehicles, and drones, in the field of electronic devices, such as mobile phones, laptops, and tablets, and in the field of electric tools, such as electric drills, electric grinders, and electric hammers. However, it should be understood that the secondary battery described in this specification may be widely utilized in various units operated based on electrical energy in addition to the above.

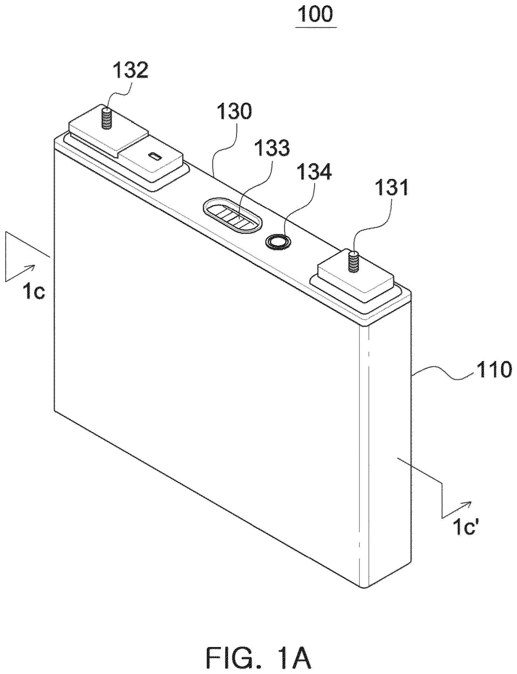

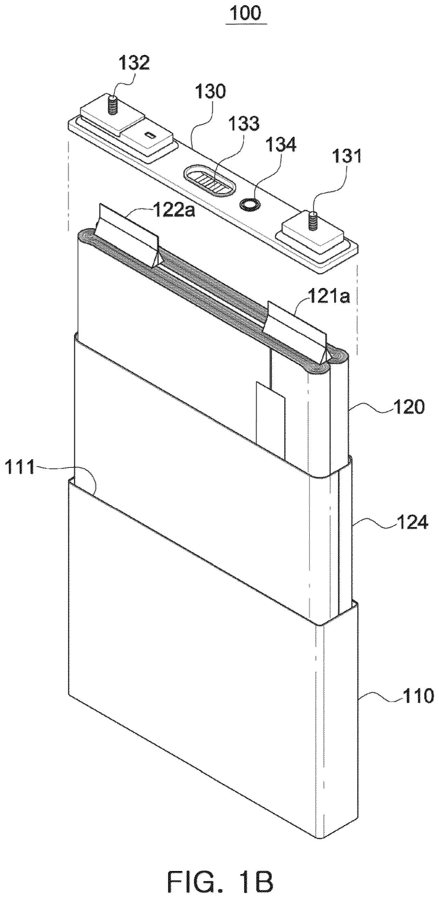

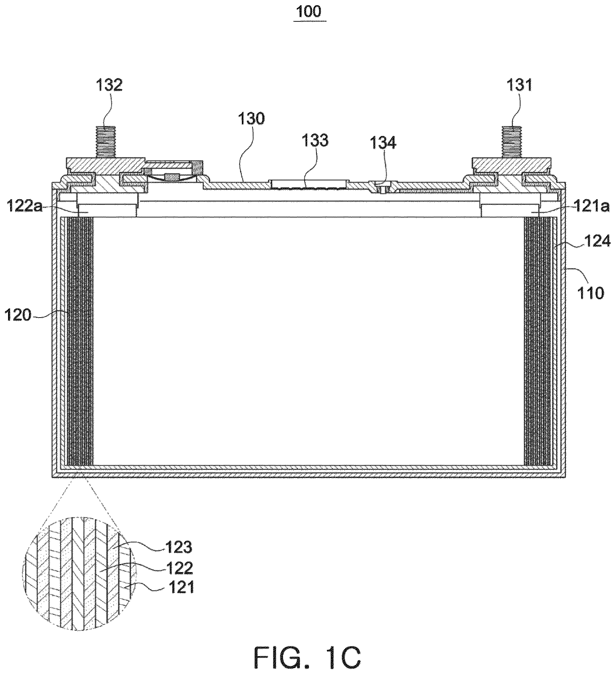

FIG. 1A is a schematic perspective view of a secondary battery according to an exemplary embodiment. FIG. 1B is a schematic exploded perspective view of the secondary battery illustrated in FIG. 1A. FIG. 1C is a schematic internal cross-sectional view of the secondary battery illustrated in FIG. 1A.

For convenience of description, the present exemplary embodiment illustrates one battery cell packaged in a prismatic shape.

Referring to FIGS. 1A to 1C, a secondary battery 100 according to the present exemplary embodiment may include a case 110.

The case 110 may provide an internal space in which an electrode assembly 120 or the like may be accommodated. In the present exemplary embodiment, the case 110 is illustrated to have a substantially rectangular parallelepiped shape.

The case 110 may include an opening 111 connected to the internal space. In the present exemplary embodiment, the opening 111 is illustrated as being provided at the top of the case 110. However, the position of the opening 111 may be changed as needed and is not limited to the example. The opening 111 may function as a passage for insertion of the electrode assembly 120 or the like. In addition, the opening 111 may function as a connection space for electrical connection between the electrode assembly 120 and an electrode terminal. The opening 111 may be closed by a cap plate 130.

A material of the case 110 may be appropriately selected in consideration of thermal and electrical conductivity, rigidity corresponding to swelling of the electrode assembly 120, processability, manufacturing costs, etc. For example, the case 110 may be formed of a metal material including aluminum or aluminum alloy.

Meanwhile, the secondary battery 100 according to the present exemplary embodiment may include the electrode assembly 120.

The electrode assembly 120 may be disposed in the internal space of the case 110. If necessary, the electrode assembly 120 may be accommodated in an insulating bag 124 and disposed inside the case 110.

The electrode assembly 120 may include a cathode material 121. The cathode material 121 may include a cathode current collector and a cathode active material. In some exemplary embodiments, the cathode current collector may include aluminum, aluminum alloy, etc., and the cathode active material may include lithium cobalt oxide, lithium manganate, lithium nickelate, and lithium iron phosphate. The cathode active material may be coated on a surface of the cathode current collector. A partial region of the cathode current collector not coated with the cathode active material may function as a cathode tab 121a. In some exemplary embodiments, a plurality of cathode tabs 121a may be provided, and some or all of the plurality of cathode tabs 121a may be bonded to each other.

The electrode assembly 120 may include an anode material 122. The anode material 122 may include an anode current collector and an anode active material. In some exemplary embodiments, the anode current collector may include copper, copper alloy, nickel, nickel alloy, etc., and the anode active material may include carbon, silicon, etc. The anode active material may be coated on a surface of the anode current collector. A partial region of the anode current collector not coated with the anode active material may function as the anode tab 122a. In some exemplary embodiments, a plurality of anode tabs 122a may be provided, and some or all of the plurality of anode tabs 122a may be bonded to each other.

The electrode assembly 120 may include the separator 123. The separator 123 may be disposed between the cathode material 121 and the anode material 122. The separator 123 may function to limit physical contact between the cathode material 121 and the anode material 122 and provide a passage for the movement of ions. In some exemplary embodiments, the separator 123 may be formed of a polymer material including polyethylene, polypropylene, etc. In addition, the separator 123 may include dry and wet separators. In some exemplary embodiments, the separator 123 may include a coating layer including a ceramic coating layer.

The electrode assembly 120 may be formed by arranging the above components by winding, stacking, etc. For example, the electrode assembly 120 may be formed in a structure in which the cathode material 121, the anode material 122, and the separator 123 are wound around a longitudinal or transverse axis. Alternatively, the electrode assembly 120 may be formed in a structure in which the above winding structure is compressed in a direction approximately perpendicular to a winding axis. The winding structure may be referred to as a 'jelly roll' or the like in the art.

As another example, the electrode assembly 120 may be formed in a structure in which the cathode material 121, the anode material 122, and the separator 123 are stacked. In some cases, in the stack structure, a plurality of unit separators 123 continuous in the longitudinal direction are sequentially folded and stacked according to the stacking of the cathode material 121 and the anode material 122. The stack structure may be referred to as 'stack and folding,' `z-folding,' etc. in the art. However, in the present exemplary embodiment, the arrangement of each component of the electrode assembly 120 is not particularly limited. The electrode assembly 120 may have various arrangements other than those illustrated above.

In some exemplary embodiments, the electrode assembly 120 may be a combination of multiple units. For example, the electrode assembly 120 may include units wound in a jelly roll manner, and two or more of the units may be combined to form the electrode assembly 120. In the present exemplary embodiment, the electrode assembly 120 is a combination of two jelly roll units. As another example, the electrode assembly 120 may include units wound in a stack-and-folding manner, and two or more of the units may be combined to form the electrode assembly 120.

The electrode assembly 120 may be accommodated in the internal space of the case 110 together with an electrolytic solution. In some exemplary embodiments, the electrolytic solution may be formed of an organic solvent including a lithium salt. For example, the lithium salt may include liquid or gel lithium hexafluorophosphate (LiPF₆) and lithium tetrafluoroborate (LiBF₄), etc, and the organic solvent may include cyclic carbonates, such as ethylene carbonate (EC), propylene carbonate (PC), etc. and linear carbonates, such as diethyl carbonate (DEC), dimethyl carbonate (DMC), and such as ethyl methyl carbonate (EMC).

In some other exemplary embodiments, the electrolytic solution may be omitted or replaced. For example, when an inorganic solid electrolyte is used, the liquid or gel electrolytic solution may be omitted.

Meanwhile, the secondary battery 100 according to the present exemplary embodiment may include the cap plate 130.

The cap plate 130 may be formed to close the opening 111. In the present exemplary embodiment, the cap plate 130 is illustrated as having a square plate shape corresponding to the opening 111. The cap plate 130 may be coupled to the case 110 to seal the internal space of the case 110 in which the electrode assembly 120 is disposed. In some exemplary embodiments, the cap plate 130 may be welded and bonded to the case 110 using ultrasonic welding, laser welding, or the like.

A cathode terminal 131 and an anode terminal 132 may be disposed on the cap plate 130. The cathode terminal 131 may be electrically connected to a cathode tab 121a of the electrode assembly 120, and the anode terminal 132 may be electrically connected to an anode tab 122a of the electrode assembly 120.

The cap plate 130 may include an electrolytic solution injection port 134. The electrolytic solution injection port 134 may be used to inject electrolytic solution into the internal space of the case 110. In the present exemplary embodiment, the electrolytic solution injection port 134 is disposed adjacent to a vent 133 in a central region of the cap plate 130. However, the position of the electrolytic solution injection port 134 may be changed variously and is not limited to the example. The electrolytic solution injection port 134 may be appropriately sealed after injection of the electrolytic solution, a formation process, etc. In some exemplary embodiments, the electrolytic solution injection port 134 may be sealed by press-fitting a ball-shaped sealing member formed of polymer resin.

The cap plate 130 may include the vent 133. In the present exemplary embodiment, the vent 133 is disposed between the cathode terminal 131 and the anode terminal 132. However, the position of the vent 133 may be changed variously as needed, and is not limited to the example. In some other exemplary embodiments, the vent 133 may be disposed in or added to the case 110.

The vent 133 may be formed to be open in response to internal pressure of the case 110. The vent 133 may function to discharge the internal pressure to the outside of the case 110 to contribute to the stabilization of the internal elements of the case 110. In the present exemplary embodiment, the vent 133 may more appropriately respond to or discharge internal pressure through components that will be described later.

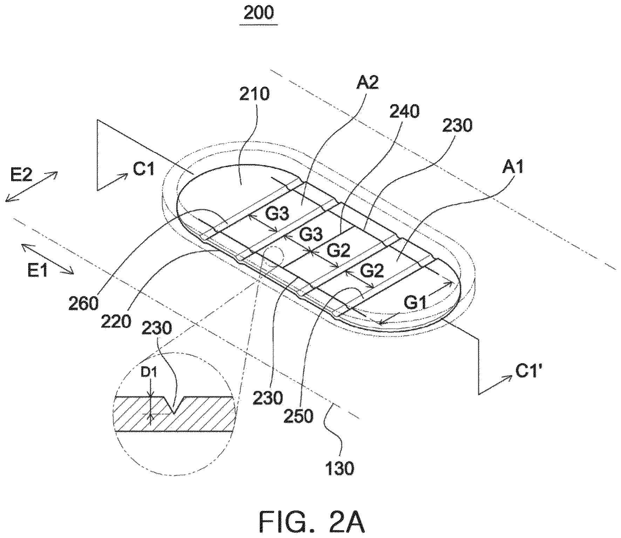

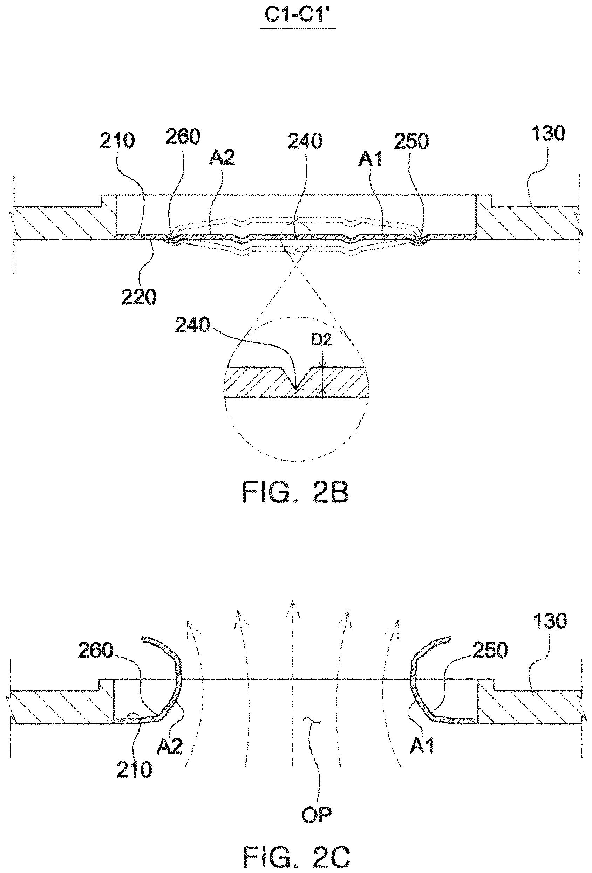

FIG. 2A is a schematic perspective view of a vent according to an exemplary embodiment. FIG. 2B is a schematic cross-sectional view of the vent illustrated in FIG. 2A.

For convenience, the vents according to each exemplary embodiment will be given new reference numerals and described below.

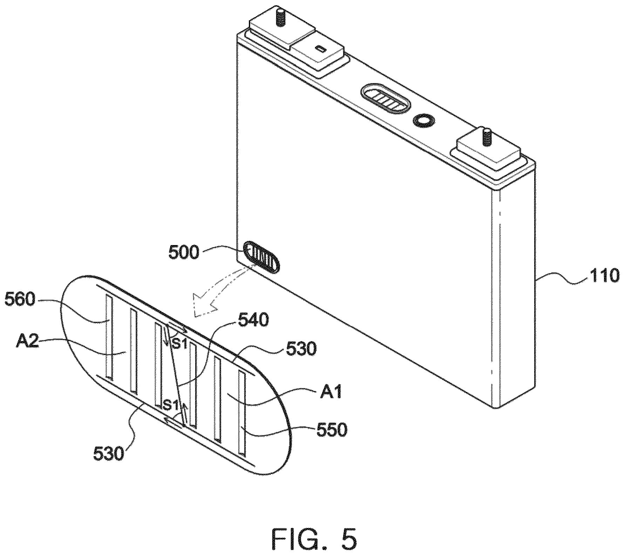

Referring to FIGS. 2A and 2B, a vent 200 according to the present exemplary embodiment may be disposed in one or more of the cap plate 130 and the case 110. In the present exemplary embodiment, a case in which the vent 200 is disposed in the cap plate 130 is illustrated, and the following description will focus thereon. For reference, FIG. 5, which will be described later, illustrates a case in which the vent 200 is disposed in the case 110.

The vent 200 according to the present exemplary embodiment may include an outer surface 210 and an inner surface 220. The outer surface 210 refers to a surface disposed toward the outside of the case 110, and the inner surface 220 refers to a surface disposed toward the inside of the case 110.

The vent 200 according to the present exemplary embodiment may be formed to extend in a first direction E1 and a second direction E2. In the present exemplary embodiment, the first direction E1 is illustrated as a direction corresponding to a longitudinal direction E1 of the cap plate 130, and the second direction E2 is illustrated as a direction corresponding to a width direction E2 of the cap plate 130. For reference, the illustrated cap plate 130 has a length in the longitudinal direction E1 larger than a length in the width direction E2. For convenience, hereinafter, it is illustrated that the first direction E1 is the longitudinal direction E1 and the second direction E2 is the width direction E2.

Meanwhile, the vent 200 according to the present exemplary embodiment may include notches 230 and 240.

The notches 230 and 240 may be formed to induce rupture of the vent 200 in response to the internal pressure of the case 110. That is, the notches 230 and 240 may define a rupture position of the vent 200. The vent 200 may be designed to rupture in a position corresponding to the notches 230 and 240 to discharge internal pressure.

The notches 230 and 240 may be formed to be recessed to a predetermined degree in the thickness direction from the outer surface 210 of the vent 200 toward the inner surface 220. The notches 230 and 240 may generally have the shape of recess formed on the outer surface 210 of the vent 200. In addition, the notches 230 and 240 may have a predetermined cross-sectional shape and extend in the longitudinal direction. In the present exemplary embodiment, the notches 230 and 240 are illustrated as having an approximately "V" shaped cross-section. The portion in which the notches 230 and 240 are formed may have a thickness smaller than a portion in which the notches 230 and 240 are not formed.

The notches 230 and 240 may extend from the outer surface 210 of the vent 200, while forming a predetermined line or pattern. In some exemplary embodiments, the notches 230 and 240 may extend in the longitudinal direction E1 or the width direction E2 of the vent 200. Alternatively, in some other exemplary embodiments, the notches 230 and 240 may extend obliquely at a predetermined angle with the longitudinal direction E1 or the width direction E2 of the vent 200.

In the present exemplary embodiment, the notches 230 and 240 may be formed to extend with a predetermined length in the longitudinal direction E1 and the width direction E2 of the vent 200, respectively. Specifically, the notches 230 and 240 may include a first notch 230 extending in the longitudinal direction E1. A pair of first notches 230 may be provided, and the pair of first notches 230 may be arranged to be spaced apart from each other at a predetermined interval in the width direction E2. In order to secure sufficient opening space upon rupture, the pair of first notches 230 may be sufficiently spaced apart from each other in the width direction E2. In the present exemplary embodiment, each first notch 230 is disposed adjacent to an outer boundary line (edge) of the vent 200 to ensure a gap in the width direction E2.

In addition, the notches 230 and 240 may include a second notch 240 extending in the width direction E2. The second notch 240 may be formed to extend in the width direction E2 between the pair of first notches 230. One end of the second notch 240 may form a contact point with the first notch 230 on one side, and the opposite end may form a contact point with the first notch 230 on the opposite side. In the present exemplary embodiment, the second notch 240 is disposed to be substantially perpendicular to the first notch 230 to form a contact point.

In some exemplary embodiments, a length of the second notch 240 may be different from a length of the first notch 230. In the present exemplary embodiment, the length of the second notch 240 is shorter than the length of the first notch 230 by a predetermined amount. In addition, the second notch 240 may be disposed in the center of the first notch 230 in the longitudinal direction. That is, the second notch 240 may be disposed to equally divide the first notch 230 extending in the longitudinal direction E1 to left and right sides. In the present exemplary embodiment, the first and second notches 230 and 240 as described above form an approximately `H' shape in plan view.

The second notch 240 may divide a first region A1 and a second region A2. The first region A1 refers to one side region in the longitudinal direction E1 of the vent 200 from the second notch 240, and the second region A2 refers to a region on the opposite side of the one side region. Based on the drawing, the vent 200 may be divided into the first region A1, which is the right region of the second notch 240, and the second region A2, which is the corresponding left region.

If necessary, the first and second notches 230 and 240 may have different depths. Specifically, the first notch 230 may be formed to have a first depth D1 from the outer surface 210, and the second notch 240 may have a second depth D2 greater than the first depth D1 by a predetermined amount. In some exemplary embodiments, a depth difference between the first and second notches 230 and 240 as described above may be implemented through pressing force of a press applied when forming the first and second notches 230 and 240. In the above case, the second notch 240 may be intended to rupture before the first notch 230. That is, according to some operating examples, as the internal pressure of the case 110 increases, the second notch 240 may be preferentially induced to rupture, and then the first notch 230 may be induced to rupture.

Meanwhile, the vent 200 according to the present exemplary embodiment may include bending guides 250 and 260.

The bending guides 250 and 260 may function to induce appropriate deformation of each of the regions A1 and A2 when the notches 230 and 240 rupture. In addition, the bending guides 250 and 260 may function to reduce unnecessary stress applied to the notches 230 and 240 by accommodating a temporary change in the internal pressure of the case 110 before the rupture of the notches 230 and 240.

The bending guides 250 and 260 may be formed to be concavely bent toward the inside of the case 110. That is, the bending guides 250 and 260 may be formed by bending the outer surface 210 of the vent 200 concavely toward the inside of the case 110. According to the curvature of the outer surface 210, the corresponding inner surface 220 may protrude convexly toward the inside of the case 110.

The bending guides 250 and 260 may have a predetermined cross-sectional shape and extend in the width direction E2 of the vent 200. In the present exemplary embodiment, the bending guides 250 and 260 are illustrated as having a partially arc-shaped cross-sectional shape. However, the cross-sectional shape of the bending guides 250 and 260 may be modified variously as needed as long as it satisfies functional elements of the bending guides 250 and 260, which will be described later, and is not limited to the example. In some alternative exemplary embodiments, the bending guides 250 and 260 may be implemented through a material, thickness, etc. rather than a structure, a shape, etc.

The bending guides 250 and 260 may extend in the width direction E2 between the pair of first notches 230. In addition, the bending guides 250 and 260 may extend in the width direction E2 to occupy most of a gap G1 between the pair of first notches 230. For example, the bending guides 250 and 260 may be formed to extend in the width direction E2 so as to occupy at least 80% of the gap G1 between the pair of first notches 230. In the present exemplary embodiment, the bending guides 250 and 260 extend to intersect the pair of first notches 230 in the width direction E2 and completely occupy the gap G1 between the pair of first notches 230.

A plurality of bending guides 250 and 260 may be provided, and the plurality of bending guides 250 and 260 may be arranged at predetermined intervals in a direction in which the first notch 230 extends. That is, the plurality of bending guides 250 and 260 may be arranged to be spaced apart from each other in the longitudinal direction E1. However, the plurality of bending guides 250 and 260 may be appropriately omitted in the region in which the second notch 240 is formed. That is, the plurality of bending guides 250 and 260 may be arranged at a predetermined interval from the second notch 240 and disposed in the remaining region of the vent 200 in which the second notch 240 is not formed.

In addition, the bending guides 250 and 260 may include a first bending guide portion 250 and a second bending guide 260. The first bending guide portion 250 may be disposed in the first region A1, and the second bending guide 260 may be disposed in the second region A2. The first and second bending guides 250 and 260 may be formed identically or similarly to each other except that their arrangement positions are different.

A plurality of first bending guide portions 250 may be provided in the first region A1. The plurality of first bending guide portions 250 may be spaced apart from each other in the longitudinal direction E1 of the vent 200 within the first region A1. In the present exemplary embodiment, two first bending guide portions 250 are illustrated. Similarly, a plurality of second bending guides 260 may be provided in the second region A2. The plurality of second bending guides 260 may be spaced apart from each other in the longitudinal direction E1 of the vent 200 within the second region A2. In the present exemplary embodiment, two second bending guides 260 are illustrated. However, the numbers of the first and second bending guides 250 and 260 may not necessarily be equal to each other, and the numbers of the first and second bending guides 250 and 260 may be different as needed.

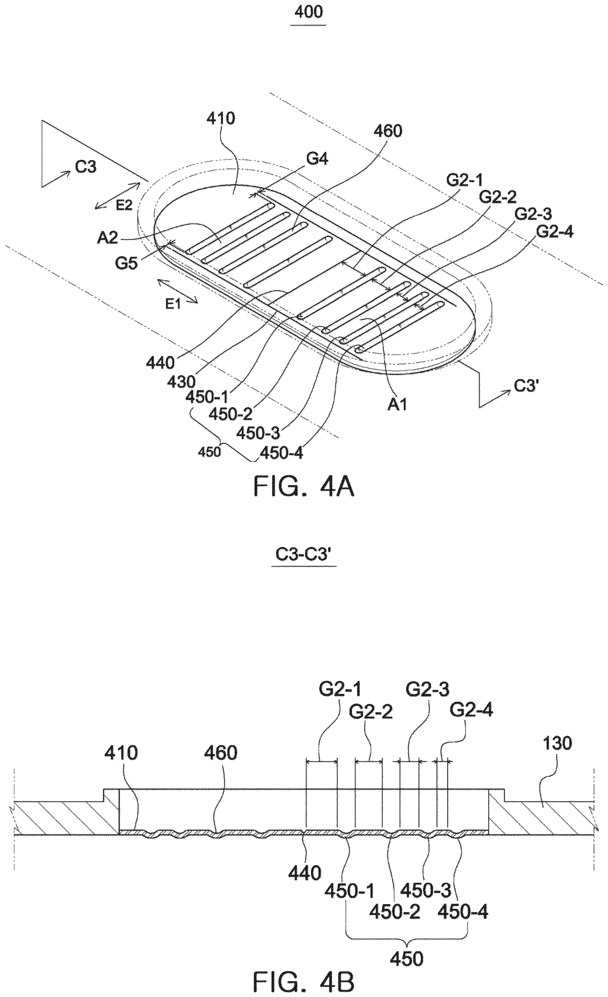

The first bending guide portion 250 may be disposed at a predetermined gap G2 from the second notch 240 or another adjacent first bending guide portion 250. In the present exemplary embodiment, each gap G2 of the first bending guide portion 250 is illustrated as being the same. Similarly, the second bending guide 260 may be disposed at a predetermined distance G3 from the second notch 240 or another adjacent second bending guide 260. In the present exemplary embodiment, each gap G3 of the second bending guide 260 is illustrated as being the same. However, if necessary, each gap G2 of the first bending guide portion 250 or each gap G3 of the second bending guide 260 may be formed to be different partially. This is illustrated in FIG. 4A, which will be described later.

Referring to FIG. 2B, the bending guides 250 and 260 as described above may function to correspond to a temporary change in the internal pressure of the case 110. Specifically, the vent 200 including a plurality of bending guides 250 and 260 may be induced to be elastically deformed to a certain degree based on the width direction E2 as axis in response to a temporary change in internal pressure of the case 110. For reference, in FIG. 2B, the above elastic deformation is somewhat exaggerated for ease of understanding.

The plurality of bending guides 250 and 260 extending in the width direction E2 may appropriately assist elastic deformation in the width direction E2 as an axis as described above. This prevents unnecessary fatigue load from accumulating in the notches 230 and 240. In addition, the plurality of bending guides 250 and 260 extending in the width direction E2 may function to appropriately limit deformation of the vent 200 in the longitudinal direction E1 as an axis. This simplifies factors, such as external force, deformation, etc. to be considered in the design of the vent 200, thereby facilitating optimization of design for materials, specifications, etc.

FIG. 2C is a schematic operating diagram of the vent illustrated in FIG. 2A.

Referring to FIG. 2C, the vent 200 may be opened appropriately depending on the internal pressure of the case 110. That is, in the vent 200, the notches 230 and 240 may rupture depending on the internal pressure of the case 110 to form a type of outlet OP, and the internal pressure may be discharged through the outlet OP.

Specifically, the vent 200 may be opened as the second notch 240 ruptures due to the internal pressure of the case 110 and then the first notch 230 ruptures. However, the rupture order of the first and second notches 230 and 240 is not limited thereto.

The vent 200 in which the first and second notches 230 and 240 rupture may secure the outlet OP as the first and second regions A1 and A2 are rolled up to side ends in the longitudinal direction E1, respectively. That is, the first region A1 may be induced to be deformed in a roll shape by the plurality of first bending guide portions 250 and rolled up to one side (right side). In addition, the second region A2 may be induced to be deformed in a roll shape by the plurality of second bending guides 260 and rolled up to the opposite side (left side). In the present exemplary embodiment, the first and second regions A1 and A2 may be induced to be deformed to be rolled up toward the outer surface 210 of the vent 200 according to the direction of the first and second bending guides 250 and 260. For convenience, in this description, the shape in which each region A1 and A2 is rolled up toward the outer surface 210 to be deformed as described above is referred to as `roll up'.

In the present exemplary embodiment, the first and second regions A1 and A2 are rolled up as described above, so that a sufficient outlet OP may be secured after the rupture of the first and second notches 230 and 240. That is, the first region A1 is rolled up to the right in the drawing, and the second region A2 is rolled up to the left in the drawing, so that the sufficient outlet OP region may be secured between the first and second regions A1 and A2. Accordingly, more smooth discharge of the internal pressure of the case 110 may be induced.

In addition, the first and second regions A1 and A2 rolled up as described above may reduce the occurrence of sharp edges after rupture. In the case of a general vent structure, sharp edges, etc. are exposed as it is after rupture, which may cause secondary damage to adjacent components. In addition, the first and second regions A1 and A2 rolled up as described above may reduce problems, such as interfering with the discharge of internal pressure due to re-deformation of each of the regions A1 and A2 after rupture.

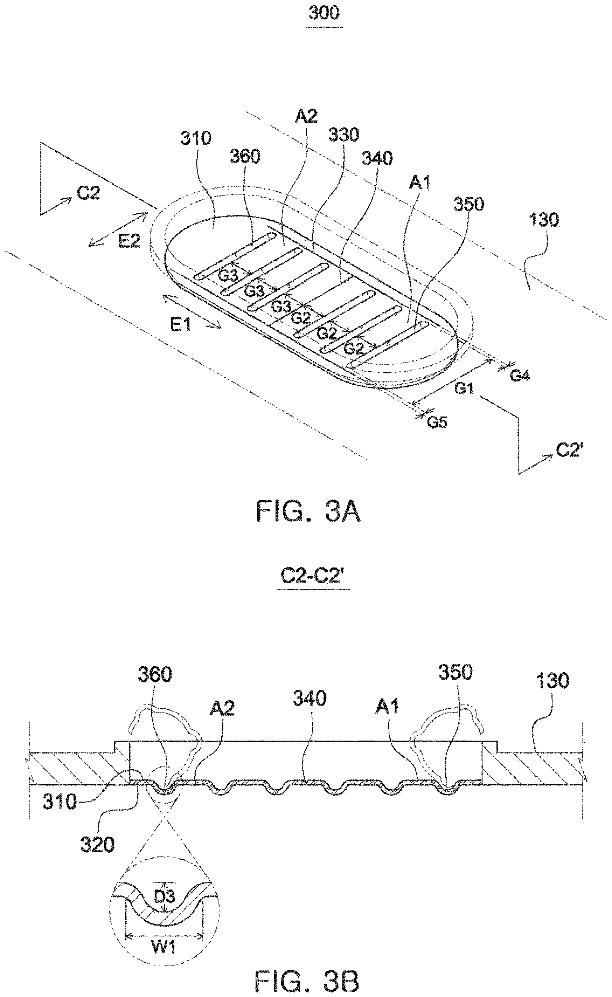

FIG. 3A is a schematic perspective view of a vent according to another exemplary embodiment. FIG. 3B is a schematic cross-sectional view of the vent illustrated in FIG. 3A.

For convenience, the following exemplary embodiments will be described based on differences from the exemplary embodiments described above.

Referring to FIGS. 3A and 3B, a vent 300 according to the present exemplary embodiment may include notches 330 and 340.

The notches 330 and 340 may include a pair of first notches 330 extending in the longitudinal direction E1 of the vent 300 and a second notch 340 extending in the width direction E2 between the pair of first notches 330. The second notch 340 may be disposed to be substantially perpendicular to the first notch 330 and may be disposed in the center of the first notch 330 in the longitudinal direction. These notches 330 and 340 are substantially similar to the exemplary embodiments described above.

Meanwhile, the vent 300 according to the present exemplary embodiment may include bending guides 350 and 360.

The bending guides 350 and 360 may be formed by bending an outer surface 310 of the vent 300 concavely toward the inside of the case 110. In addition, the bending guides 350 and 360 may extend in the width direction E2 between the pair of first notches 330.

Here, the bending guides 350 and 360 of the present exemplary embodiment may be formed to be shorter than a gap G1 between the pair of first notches 330 by a predetermined amount. One end of the bending guides 350 and 360 may be spaced apart from the first notch 330 on one side by a predetermined distance G4, and the opposite end of the bending guide 350 and 360 may be spaced apart from the corresponding second notch 340 on the opposite side by a predetermined distance G5. That is, both ends of the bending guides 350 and 360 of the present exemplary embodiment may be spaced apart from the first notch 330.

The arrangement of the bending guides 350 and 360 as described above takes into account smooth rupture of the first notch 330. That is, the arrangement of the bending guides 350 and 360 as described above eliminates a contact point portion between the bending guides 350 and 360 and the first notch 330, thereby eliminating unintended reinforcing effects at the contact point portion.

As a result, the bending guides 350 and 360 of the present exemplary embodiment may be formed to be larger than the bending guides 250 and 260 of the exemplary embodiment described above. That is, referring to FIG. 3B, the bending guides 350 and 360 of the present exemplary embodiment may have a width W1 and depth D3 that are larger by a predetermined amount compared to the bending guides 250 and 260 of the exemplary embodiment described above. Since the bending guides 350 and 360 of the present exemplary embodiment do not form a contact point with the first notch 330, the shape, size, arrangement, etc. may be determined with a higher degree of design freedom.

Meanwhile, the bending guides 350 and 360 may include a first bending guide portion 350 disposed in the first region A1 and a second bending guide 360 disposed in the second region A2. A plurality of first bending guide portions 350 may be provided, and in the present exemplary embodiment, three first bending guide portions 350 are illustrated. Similarly, a plurality of second bending guides 360 may be provided, and in the present exemplary embodiment, three second bending guides 360 are illustrated. In addition, in the present exemplary embodiment, the gaps G2 and G3 between the first and second bending guides 350 and 360 may be formed to be equal. This is generally similar to the exemplary embodiment described above.

FIG. 4A is a schematic perspective view of a vent according to another exemplary embodiment in the present disclosure. FIG. 4B is a schematic cross-sectional view of the vent illustrated in FIG. 4A.

Referring to FIGS. 4A and 4B, a vent 400 according to the present exemplary embodiment may include notches 430 and 440.

The notches 430 and 440 may include a pair of first notches 430 extending in the longitudinal direction E1 of the vent 400 and a second notch 440 extending in the width direction E2 between the pair of first notches 430. These notches 430 and 440 are generally similar to the exemplary embodiments described above.

Meanwhile, the vent 400 according to the present exemplary embodiment may include bending guides 450 and 460.

The bending guides 450 and 460 may be formed by bending an outer surface 410 of the vent 400 concavely toward the inside of the case 110. In addition, the bending guides 450 and 460 may extend in the width direction E2 between the pair of first notches 430. In addition, both ends of the bending guides 450 and 460 may be spaced apart from the first notch 430 by predetermined gaps G4 and G5. This is generally similar to the exemplary embodiment described above.

Meanwhile, the bending guides 450 and 460 may include a plurality of first bending guide portions 450 arranged in the first region A1 and a plurality of second bending guides 460 arranged in the second region A2. In the present exemplary embodiment, four first and second bending guides 450 and 460 are illustrated.

Here, the bending guides 450 and 460 of the present exemplary embodiment may be spaced differently depending on positions thereof. Specifically, if the four first bending guide portions 450 are referred to as 1-1 bending guide 450-1 to 1-4 bending guide 450-4 based on the second notch 440, the 1-1 bending guide 450-1 may be spaced apart from the second notch 440 by a first gap G2-1, and the 1-2 bending guide 450-2 may be spaced apart from the 1-1 bending guide 450-1 by a second gap G2-2. Here, the second gap G2-2 may be formed to be smaller than the first gap G2-1 by a predetermined amount. Similarly, a third gap G2-3 of the 1-3 bending guide 450-3 and a fourth gap G2-4 of the 1-4 bending guide 450-4, etc. may also be formed to be gradually smaller. In addition, similarly to the above, four second bending guides 460 may be formed so that a gap therebetween gradually narrows as they are spaced apart from the second notch 240.

Referring to FIG. 4B, the bending guides 450 and 460 arranged at different intervals as described above may induce a more complete roll-up of each region A1 and A2. That is, since the bending guides 450 and 460 are arranged closer to each other in a position relatively spaced apart from the second notch 440, each region A1 and A2 may be rolled up, while forming a smaller curvature in a position spaced apart from the second notch 440 and forming a larger curvature in a position adjacent to the second notch 440. Through this, the vent 400 of the present exemplary embodiment induces each region A1 and A2 to be rolled up more compactly and ensures a sufficient area of the outlet OP when ruptured.

FIG. 5 is a schematic perspective view of a vent according to another exemplary embodiment in the present disclosure.

Referring to FIG. 5, a vent 500 according to the present exemplary embodiment may be disposed in the case 110.

In the present exemplary embodiment, the vent 500 is disposed adjacent to one corner at a lower end of a front surface of the case 110. However, the position of the vent 500 in the case 110 may be changed variously as needed, and is not limited to the example.

The vent 500 according to the present exemplary embodiment may be formed substantially similar to the exemplary embodiments described above, except for the arrangement position. The vent 500 may include notches 530 and 540, and the notches 530 and 540 may include a pair of first notches 530 and a second notch 540 extending between the pair of first notches 530. In addition, the vent 500 may include bending guides 550 and 560, and the bending guides 550 and 560 may include a plurality of first bending guide portions 550 disposed in the first region A1 and a plurality of second bending guides 560 disposed in the second region A2. In the present exemplary embodiment, three first and second bending guides 550 and 560 are illustrated.

The vent 500 of the present exemplary embodiment is partially different from the exemplary embodiments described above in the configuration of the second notch 540. That is, the second notch 540 of the present exemplary embodiment may be formed to extend obliquely between the pair of first notches 530. This is in contrast to the exemplary embodiments described above in which the second notches 240, 340, and 440 are formed to extend substantially perpendicular to the first notches 230, 330, and 430. In the present exemplary embodiment, the second notch 540 may extend to form a predetermined angle S1 with the pair of first notches 530, and the angle S1 may be set to a predetermined acute angle. For example, the second notch 540 may be disposed to form the angle S1 of 30 to 60 degrees with the pair of first notches 530.

The second notch 540 as described above may induce more smooth rupture at a contact point portion with the first notch 530. That is, since the second notch 540 is in contact with the first notch 530 at a predetermined acute angle, appropriate rupture at the acute angle portion may be induced in response to the internal pressure of the case 110. Meanwhile, after the rupture, the vent 500 may be opened as the rupture is induced along each of the first notch 530 and the second notch 540 based on the contact point. Thereafter, the first and second regions A1 and A2 of the vent 500 are rolled up by the first and second bending guides 550 and 560, respectively, thereby achieving the operations and effects similar to the exemplary embodiments described above.

As described above, the secondary battery according to exemplary embodiments of the present disclosure may include the vent opened in response to the internal pressure of the case. In the vent according to exemplary embodiments of the present disclosure, each region based on the notch may be induced to be rolled up and deformed after rupture. That is, based on the second notch, roll-up deformation to one side may be induced in the first region, and roll-up deformation to the opposite side may be induced in the second region on the opposite side. The structure and shape of the notch, the bending guide disposed in each region, etc. proposed in the exemplary embodiments of the present disclosure may appropriately induce the roll-up deformation described above.

The secondary battery according to the exemplary embodiments of the present disclosure may appropriately secure and maintain the area of the outlet after the vent ruptures through the roll-up of the vent as described above. In some situations, this may contribute to rapidly stabilizing heat, pressure, and by-products inside the secondary battery.

In addition, the secondary battery according to exemplary embodiments of the present disclosure may appropriately respond to a change in the internal pressure of the case through the bending guide. That is, in the exemplary embodiments of the present disclosure, the bending guide may accommodate the internal pressure within an allowable value before rupture of the vent and induce appropriate elastic deformation. The bending guide may function to prevent unnecessary fatigue load from accumulating in the notch and limit the direction of elastic deformation of the vent to a certain direction.

However, the technical effects that may be obtained through the exemplary embodiments of the present disclosure are not limited to the effects mentioned above. Other technical effects that are not mentioned may be clearly understood by those skilled in the art from other descriptions in the specification, such as the detailed description.

While exemplary embodiments have been illustrated and described above, it will be apparent to those skilled in the art that modifications and variations could be made without departing from the scope of the present disclosure as defined by the appended claims.

## Claims

1. A secondary battery comprising:
a case accommodating an electrode assembly therein;
a cap plate sealing an opening of the case; and
a vent provided in one or more of the case and the cap plate,
wherein the vent includes:
a notch induced to rupture according to internal pressure of the case; and
one or more bending guides inducing roll up deformation of each ruptured region.

2. The secondary battery of claim 1, wherein
the notch includes:
a pair of first notches extending in a first direction on an outer surface of the vent and spaced apart from each other in a second direction; and
a second notch extending between the pair of first notches.

3. The secondary battery of claim 2, wherein the second notch is disposed to equally divide the first notch into left and right portions in the first direction and extends in the second direction perpendicular to the first direction.

4. The secondary battery of claim 2, wherein the second notch is formed between the pair of first notches and extends obliquely at a predetermined angle with respect to the first notch.

5. The secondary battery of any one of claims 2 to 4, wherein
the first notch has a first depth from the outer surface, and
the second notch has a second depth from the outer surface, and the second depth is formed to be greater than the first depth by a predetermined amount.

6. The secondary battery of any one of claims 1 to 3 and 5, wherein the notch forms an "H" shape in plan view.

7. The secondary battery of any one of claims 1 to 6, wherein the bending guide induces each region to be rolled up toward the outer surface of the vent to be deformed.

8. The secondary battery of any one of claims 1 to 7, wherein the bending guide is concavely bent toward the inside of the case, extends in a second direction, and a plurality of bending guides are arranged to be spaced apart from each other at predetermined intervals in a first direction, perpendicular to the second direction.

9. The secondary battery of claim 8, wherein the bending guide is formed such that one end in the second direction is spaced apart from the notch by a predetermined distance, and an opposite end corresponding to the one end is spaced apart from the notch by a predetermined distance.

10. The secondary battery of any one of claims 2 to 7, wherein the bending guide includes a first bending guide portion disposed in a first region divided by the second notch, extending in a second direction, provided in plural to be spaced apart from each other by a predetermined interval in the first direction, and inducing the first region to be rolled up and deformed to one side.

11. The secondary battery of claim 10, wherein, in the first bending guide portion, a gap between a pair of first bending guide portions that are relatively adjacent to the second notch is formed to be greater, by a predetermined amount, than a gap between another pair of first bending guide portions that are relatively spaced apart from the second notch.

12. The secondary battery of claim 10 or claim 11, wherein the bending guide includes a second bending guide disposed in a second region corresponding to the first region, extending in the second direction, provided in a plural to be spaced apart from each other by a predetermined interval in the first direction, and inducing the second region to be rolled up and deformed to the opposite side corresponding to the one side.
